# EUROPEAN PATENT SPECIFICATION

(11) **EP 2 591 955 B1**
(45) Date of publication and mention of the grant of the patent: **10.12.2014**
(21) Application number: 11189003.4
(22) Date of filing: 14.11.2011
(51) Int. Cl.: B60R 21/231

(54) **Method for manufacturing an envelope for an airbag**
Verfahren zur Herstellung einer Hülle für einen Airbag
Procédé et installation our la fabrication d'une enveloppe pour un airbag

(43) Date of publication of application: 15.05.2013
(73) Proprietor: ALT Technologies B.V., 3565 AK Utrecht (NL)
(72) Inventor: Sminia, Jelmer Douwe, 3523 SZ Utrecht (NL); van der Linden, Ingmar Cees Johannes, 3544 MN Utrecht (NL)
(74) Representative: Nederlandsch Octrooibureau

(56) References cited:
- EP-A1- 1 526 045
- EP-A1- 2 311 692
- DE-A1-102006 032 805
- TANJA VATTERODT ET AL: "Textilschweissen", KUNSTOFFE INTERNATIONAL, CARL HANSER VERLAG, MUNCHEN, DE, no. 10, 1 October 2006 (2006-10-01), pages 221-224, XP001525361, ISSN: 0023-5563

## Description

The invention is related to a method for producing an envelope for an airbag, comprising the steps of:
- providing a sheet of flexible material having a longitudinal and a transverse direction,
- folding or bending the sheet so as to form two panels which each have a respective free edge,
- applying the panels onto each other,
- displacing the panels and a weld device in longitudinal direction with respect to each other,
- applying a weld between the panels while displacing the panels and the weld device with respect to each other,
- providing a nominal weakening line.

Such a method is known from EP-A-1526045. The envelopes thus obtained may be formed from a sheet of material which is wound off from a reel. In this connection, the envelopes, after forming thereof, may still be connected to each other in a series. In this form, the envelopes may be rolled up for storage and transport. Subsequently, the series may be rolled off and the envelopes separated from each other. In the alternative, it is also possible to form the envelopes from material parts which have been separated beforehand from the strip of material.

After the envelopes have been formed, an inflatable balloon is introduced therein so as to complete the airbag. The envelope may have openings and tabs and the like for several purposes. The opening for instance may serve the purpose of checking the proper position and orientation of the balloon within the envelope. The tabs are used for mounting the airbag within the vehicle interior.

The airbags are applied at several locations within the vehicle interior. For instance, airbags are located in the steering wheel for the driver, the dashboard for the passenger and the like. Furthermore, airbags are located above the side windows so as to mitigate the effects of lateral collisions. For all these locations, it is desirable that the space and volume needed to incorporate the airbag are as small as possible, as this goes at the expense of the free space within the vehicle interior. Furthermore it is desirable to adapt the shape of the airbag to the local conditions.

The object of the invention is therefore to provide a method for manufacturing an envelope for an airbag the shape of which can be varied in an efficient manner so as to cope with the several spatial conditions which prevail within a vehicle interior. A further object of the invention is therefore to provide a method by means of which a constant welding speed for all the envelope is in a consecutive series can be obtained. In the method for manufacturing an envelope, said objects are achieved by varying the position of the weld device and the panels with respect to each other in the transverse direction of the panels, inserting an intermediate sheet part between directly consecutive interconnected envelopes and displacing the panels and the weld head with respect to each other in transverse direction while inserting an intermediate sheet part..

As a result of the possibility to vary the transverse position of the weld, the shape of the envelope thus manufactured can be selected at will. Thus, the weld line may for instance follow a straight trajectory, either parallel to or at a non-zero angle with respect to the fold line. Alternatively, or in combination with such straight trajectory, the weld may follow a curved trajectory. The welding can for instance be carried out by means of ultrasound through a horn. Additionally, the method according to the invention may comprise the steps of applying at least one cut in a panel, which cut has a length which is at least one order of magnitude smaller than the largest dimension of the envelope and said cut being remote from the free edges. In the finished airbag, the balloon may be observed through such cut, for instance in connection with checking the proper orientation thereof.

The parts of the weld trajectory which are not parallel to the longitudinal direction or feed direction, are generally at a small angle, e.g. smaller than 5°, preferably smaller than 2°, more preferably smaller than 1°, most preferably smaller than 0,1° with respect to said longitudinal direction. Thus, the speed of displacement of the panels and the welding head is much larger than the speed of mutual displacement thereof in transverse direction. For instance, these speeds differ from each other at least with one or two orders of magnitude (at least with a factor 10 or 100). Thereby, it is possible to obtain the transverse displacement of the panels and a displacement mechanism, such as a friction wheel, without interfering with the desired constant displacement speeds of the panels and the welding head with respect to each other. Also, the resulting speed of displacement of the panels on the other hand, and the welding head on the other hand, will hardly differ from the longitudinal speed of displacement thereof.

Thus, with the aim of obtaining a uniform weld, preferably the sheet material and the welding device are displaced with respect to each other at a constant speed. In case the weld also acts as a nominal weakening line, a uniform and predictable rupture of the envelope upon inflating the inserted balloon is obtained.

Furthermore, the method may comprise the steps of providing a shaped cut the two ends of which join the fold line, and forming a lip defined by the shaped cut, said cut extending from the fold line. A lip thus formed may be used for mounting the airbag within the vehicle interior.

The shape of the trajectory of the free edges of the panels may vary in accordance with the trajectory of the weld, although a different trajectory of the free edges may be selected as well. Also, the trajectories described by the free edges themselves may vary with respect to each other. Alternatively, the panels may be congruent.

The weld may have a strength which is lower than the tear strength of the flexible material, in which case the weld forms a nominal weakening line along which the envelope is torn upon inflating the balloon. Alternatively or additionally, a nominal weakening line in the flexible material of at least one of the panels may be provided. Such nominal weakening line may be formed for instance by means of a series of cuts in the flexible material.

According to the preferred embodiment of the method according to the invention, the step of applying a weld between the panels is repeated so as to form a series of consecutive interconnected envelopes. Thereby, the series of envelopes can be handled in an efficient manner. For instance, the method may comprise the step of rolling the series of envelopes onto a roll and/or separating the envelopes from each other. Once the series of envelopes is rolled up, the roll in question can easily be stored or transferred to a production location for completing the airbag. At that time, the series is unrolled and the envelopes are separated from each other.

As mentioned before, it is of importance that the panels and the welding device are displaced at a constant speed with respect to each other during the welding operation. Thereby, the prescribed properties of the weld can be obtained. By varying the cross-sectional shape of the envelope, it may however occur that the ends of directly adjacent envelopes have different cross-sectional shapes and dimensions. Thus, the position in transverse direction of the end of the previous envelope may be different from the position in transverse direction of the next envelope. This means that the mutual positions in transverse direction of the welding device and the panels will have to be adjusted.

According to the invention, consecutive envelopes do not directly adjoin each other, but enclose intermediate sheet parts. The presence of the intermediate sheet parts provides the opportunity to adjust the mutual transverse positions of the welding device and the panels with respect to each other without having to interrupt the longitudinal displacement. This makes it possible to displace the welding device and the panels, from the position at the end of a previous envelope, to the position at the beginning of the next envelope while maintaining the process of displacing the welding device and the panels with respect to each other in the longitudinal direction. As a result, it is not necessary to apply start/stop operations.

In this connection, it is also possible to apply the step of rolling the series of consecutive interconnected envelopes and intermediate sheet parts onto a roll and/or separating the intermediate sheet parts from the envelopes. Furthermore, it is possible to apply the steps of:
- maintaining the process of applying a welds so as to form consecutive envelopes and welded intermediate sheet parts,
- separating the welded panel intermediate sheet parts from said consecutive envelopes.

The welding process is thus carried out in a fully continuous fashion, without interruption at the intermediate sheet parts. This further guarantees a uniform weld over the length of the envelopes themselves as well as between consecutive envelopes. Nevertheless, it would also be possible to pause or interrupt the welding process at the location of the intermediate sheet parts.

The sheet for the envelope may consist of various materials, such as polypropylene, polyethylene, polyamide, or polyester nonwovens. Also, polyester or polypropylene films may be applied.

The invention will be described further with reference to an example shown in the drawings.
Figure 1 shows a first example of an envelope according to the invention.
Figure 2 shows a second example of an envelope according to the invention.
Figure 3 shows a top view on an installation for manufacturing an envelope.
Figure 4 shows an end view of the installation of figure 3.
Figure 5 shows a cross-section through an airbag incorporating the envelope according to the invention.
Figure 6 shows an example of a series of envelopes.

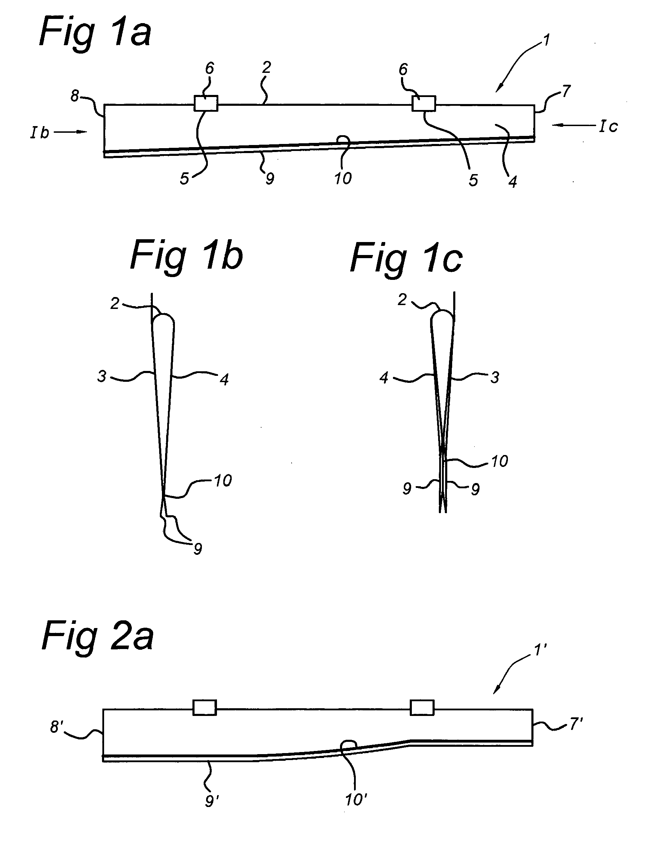

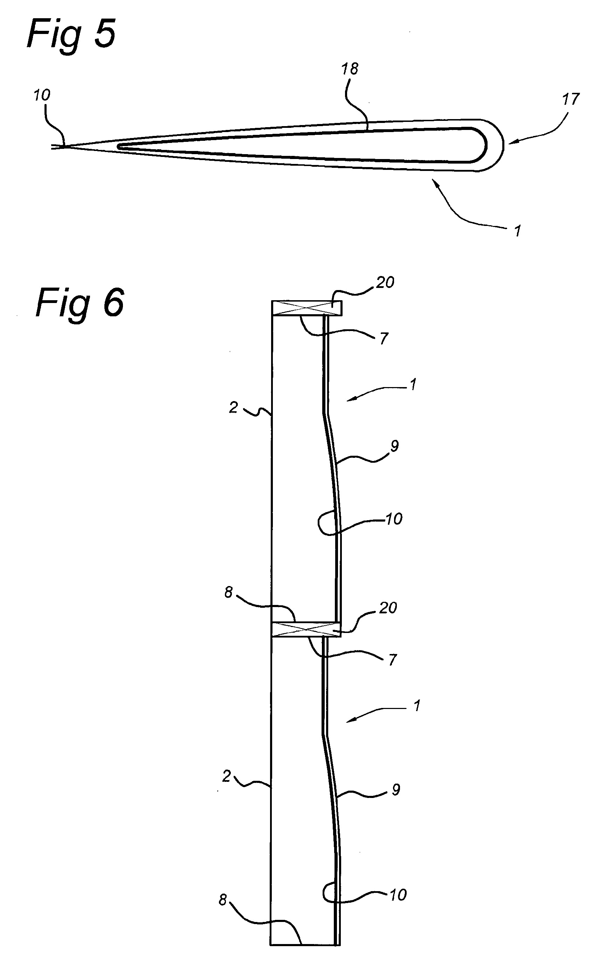

The airbag 1 as shown in figure 1 consists of a sheet of material, for instance textile material, which is folded along the fold line 2 and comprises two panels 3, 4 which lie on top of each other. The sheet of material, in the embodiment shown, has a number of cut-outs 5 bordering the fold line 2 and which form lips 6 which are for instance used for mounting the envelope, in the form of an airbag, within the vehicle interior. A cross-section of an airbag 17 is shown in figure 5. Said airbag 17 consists of the envelope 1 within which the inflatable balloon 18 has been accommodated.

The envelope has a first end 7 and a second end 8. At their free edges 9, the panels 3, 4 are connected to each other by means of a weld line 10. As shown in figure 1, the width of the first end 7 is smaller than the width of the second end 8. This is made possible by the fact that the weld line 10 runs at a nonzero angle with respect to the fold line 2. In the embodiment shown in figure 1, the weld line 10 (and also edges 9 of the panels 3, 4) is straight, however this is not always necessary as shown in figure 2.

The embodiment of figure 2 shows an envelope 1' which has free edges 9' and a weld line 10' having straight parts near the opposite ends 7', 8', and a curved part in between. Thus, the free edges 9'and the weld line 10' have an overall non-straight shape. Of course, the shape of free edges 9' and of the weld line 10' may take any form which is desirable from the point of view of the vehicle interior design.

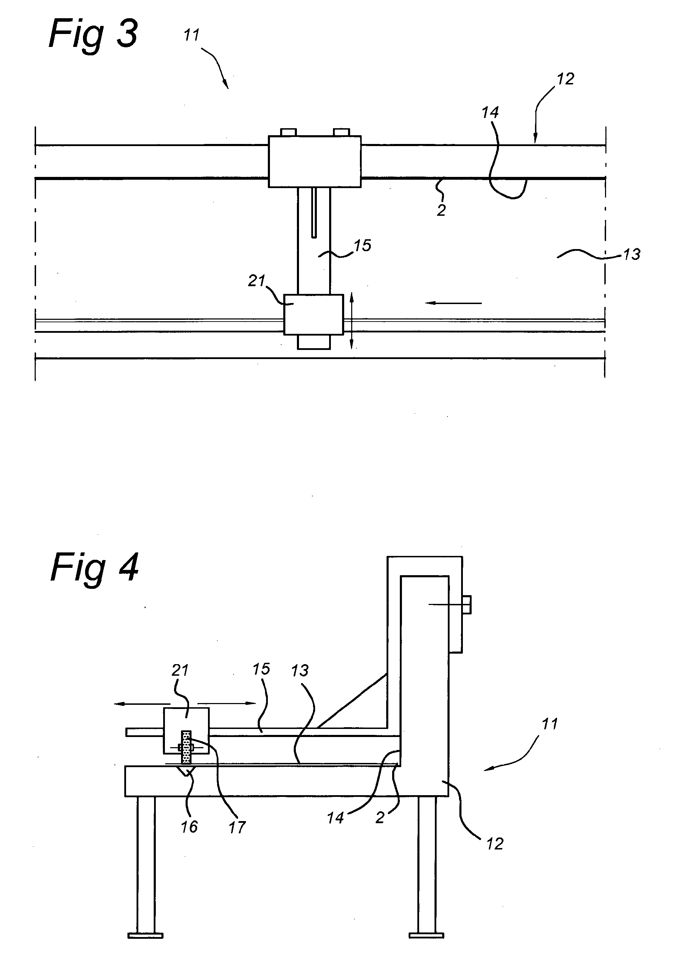

The figures 3 and 4 show a top view and end view respectively of the installation 11 for manufacturing the envelope according to the invention, for instance as shown in figures 1 and 2. This installation consists of a frame 12 which carries a flat table 13. Along one side of the flat table 13, guide means 14 are arranged. In this embodiment, the guide means 14 carry an arm 15 which is fixedly positioned above the table 13. The arm 15 carries friction wheel 19 which rests on the material and by means of which the material is fed at a constant speed over the table 13. Underneath the friction wheel 19, an ultrasonic welding horn is positioned in the table. Both the friction wheel 19 and the ultrasonic welding device, such as an ultrasonic welding horn 16 are displaceable in transverse direction by the adjustment device 21as shown by the arrows in figure 3 and 4. The fold line 2 of the sheet of material is positioned on the table 13 against the guide means 14. Thereby, any desired shape of the weld 9 can be obtained.

Figure 6 shows a series of interconnected envelopes 1 and intermediate sheet parts 20. This series can be rolled onto a roll; alternatively, the envelopes 1 can be separated from the intermediate sheet parts 20. The intermediate sheet parts 20 can subsequently be discarded. The presence of intermediate sheet parts 20 between consecutive envelopes 1 is useful as it enables to reposition the welding device 16 without having to apply start/stop operations for the series. Thereby, a generally constant speed of the sheet material and the welding head 16 with respect to each other can be maintained, thus ensuring a uniform quality of the weld.

After finishing the weld 10 of a previous envelope 1, the welding head 16 can be brought to the new position, when seen in transverse direction, for starting the weld 10 of the next envelope 1. This repositioning can take place while the sheet of material maintains a constant speed with respect to the welding head 16.

## Claims

1. Method for producing an envelope for an airbag, comprising the steps of:
- providing a sheet of flexible material having a longitudinal and a transverse direction,
- folding or bending the sheet so as to form two panels (3, 4) which each have a respective free edge (9),
- applying the panels onto each other,
- displacing the panels and a weld device (16) along each other in the longitudinal direction,
- applying a weld (10) between the panels (3, 4) while displacing the panels and the weld device (16) along each other,
- providing a nominal weakening line,
**characterised** by- varying the position of the weld device (16) and the panels (3, 4) with respect to each other in the transverse direction of the panels (3, 4),
- inserting an intermediate sheet part (20) between directly consecutive interconnected envelopes (1),
- displacing the panels (3, 4) and the weld head (16) with respect to each other in transverse direction while inserting an intermediate sheet part (20).

2. Method according to claim 1, comprising the step of welding the panels (3, 4) by means of ultrasound.

3. Method according to claim 1 or 2, comprising the step of displacing the material and the weld device (10) along each other at a constant speed, for instance by means of a friction wheel (19).

4. Method according to any of the preceding claims, comprising the step of:
- making the width of a panel (3, 4) vary,
- maintaining a fixed distance between said edge of a panel with varying width and the weld device (16) while displacing the panels along the weld device (16).

5. Method according to any of the preceding claims, comprising the steps of:
- repeating the step of applying a weld (10) between the panels (3, 4) so as to form a series of consecutive interconnected envelopes (1).

6. Method according to claim 5, comprising the step of:
- rolling the series of envelopes onto a roll and/or separating the envelopes (1) from each other.

7. Method according to any of the preceding claims, comprising the step of:
- rolling the series of consecutive interconnected envelopes (1) and intermediate sheet parts (20) onto a roll and/or separating the intermediate sheet parts from the envelopes.

8. Method according to any of the preceding claims, comprising the steps of:
- maintaining the process of applying consecutive welds (10) and forming consecutive envelopes (1) and welded intermediate sheet parts (20),
- separating the welded panel intermediate sheet parts (20) from said consecutive envelopes (1).

9. Method according to any of the preceding claims, comprising the step of:
- providing a weld (10) the strength of which is lower than the tear strength of the flexible material, said weld forming a nominal weakening line.

10. Method according to any of the preceding claims, comprising the step of:
- providing a nominal weakening line in the flexible material of at least one of the panels.

11. Method according to claim 10, comprising the step of:
- forming the nominal weakening line by means of a series of cuts in the flexible material.

## Patentansprüche

1. Verfahren zum Herstellen einer Hülle für einen Airbag, umfassend die Schritte:
- Bereitstellen eines Bogens eines flexiblen Materials mit einer Längs- und einer Querrichtung,
- Falten oder Biegen des Bogen so, dass zwei Platten (3,4) gebildet werden, die jede eine jeweils freie Kante (9) aufweisen,
- Anbringen der Platten aufeinander,
- Verschieben der Platten und einer Schweißvorrichtung (16) aneinander entlang in der Längsrichtung,
- Anbringen einer Schweißverbindung (10) zwischen den Platten (3,4) während die Platten und die Schweißvorrichtung (16) aneinander entlang verschoben werden,
- Bereitstellen einer nominalen Schwächungslinie,
gekennzeichnet durch- Variieren der Position der Schweißvorrichtung (16) und der Platten (3,4) bezüglich zueinander in der Querrichtung der Platten (3,4),
- Einführen eines dazwischenliegenden Bogenteils (20) zwischen direkt aufeinanderfolgende miteinander verbundene Hüllen (1),
- Verschieben der Platten (3,4) und des Schweißkopfes (16) bezüglich zueinander in Querrichtung, während ein dazwischenliegender Bogenteil (20) eingeführt wird.

2. Verfahren nach Anspruch 1, umfassend den Schritt des Schweißens der Platten (3,4) durch Ultraschall.

3. Verfahren nach Anspruch 1 oder 2, umfassend den Schritt des Verschiebens von Material und der Schweißvorrichtung (10) aneinander entlang mit gleichbleibender Geschwindigkeit, zum Beispiel durch ein Reibrad (19).

4. Verfahren nach einem beliebigen der voranstehenden Ansprüche, umfassend den Schritt:
- Variierenlassen der Breite einer Platte (3,4),
- Beibehalten eines festen Abstands zwischen der Kante einer Platte mit variierender Breite und der Schweißvorrichtung (16), während die Platten entlang der Schweißvorrichtung (16) verschoben werden.

5. Verfahren nach einem beliebigen der voranstehenden Ansprüche, umfassend den Schritt:
- Wiederholen des Schritts des Anbringens einer Schweißverbindung (10) zwischen den Platten (3,4), um eine Reihe von aufeinanderfolgenden miteinander verbundenen Hüllen (1) zu bilden.

6. Verfahren nach Anspruch 5, umfassend den Schritt:
- Aufrollen der Reihe von Hüllen auf eine Rolle und/oder Trennen der Hüllen (1) voneinander.

7. Verfahren nach einem beliebigen der voranstehenden Ansprüche, umfassend den Schritt:
- Aufrollen der Reihe von aufeinanderfolgenden miteinander verbundenen Hüllen (1) und dazwischenliegenden Bogenteilen (20) auf eine Rolle und/oder Trennen der dazwischenliegenden Bogenteile von den Hüllen.

8. Verfahren nach einem beliebigen der voranstehenden Ansprüche, umfassend die Schritte:
- Beibehalten des Verfahrens des Anbringens von aufeinander folgenden Schweißverbindungen (10) und Bilden von aufeinanderfolgenden Hüllen (1) und geschweißten dazwischenliegenden Bogenteilen (20)
- Trennen der geschweißten Platte-dazwischenliegenden Bogenteile (20) von den aufeinanderfolgenden Hüllen (1).

9. Verfahren nach einem beliebigen der voranstehenden Ansprüche, umfassend den Schritt:
- Bereitstellen einer Schweißverbindung (10), deren Stärke geringer ist als die Reißfestigkeit des flexiblen Materials, wobei die Schweißverbindung eine nominale Schwächungslinie bildet.

10. Verfahren nach einem beliebigen der voranstehenden Ansprüche, umfassend den Schritt:
- Bereitstellen einer nominalen Schwächungslinie im flexiblen Material von mindestens einer der Platten.

11. Verfahren nach Anspruch 10, umfassend den Schritt:
- Bilden der nominalen Schwächungslinie durch eine Reihe von Schnitten im flexiblen Material.

## Revendications

1. Procédé de production d'une enveloppe pour un airbag, comprenant les étapes consistant à :
fournir une feuille de matériau flexible ayant une direction longitudinale et une direction transversale,
plier ou courber la feuille de façon à former deux panneaux (3, 4) qui ont chacun un bord libre respectif (9),
appliquer les panneaux l'un sur l'autre,
déplacer les panneaux et un dispositif de soudage (16) les uns le long de l'autre dans la direction longitudinale,
appliquer une soudure (10) entre les panneaux (3, 4) tout en déplaçant les panneaux et le dispositif de soudage (16) les uns le long de l'autre,
fournir une ligne d'affaiblissement nominale,
**caractérisé par** le fait de faire varier la position du dispositif de soudage (16) et des panneaux (3, 4) relativement les uns à l'autre dans la direction transversale des panneaux (3, 4),
insérer une partie de feuille intermédiaire (20) entre des enveloppes interconnectées directement consécutives (1),
déplacer les panneaux (3, 4) et la tête de soudage (16) relativement les uns à l'autre dans une direction transversale tout en insérant une partie de feuille intermédiaire (20).

2. Procédé selon la revendication 1, comprenant l'étape consistant à souder les panneaux (3, 4) au moyen d'ultrasons.

3. Procédé selon la revendication 1 ou 2, comprenant l'étape consistant à déplacer le matériau et le dispositif de soudage (10) l'un le long de l'autre à une vitesse constante, par exemple au moyen d'une roue de frottement (19).

4. Procédé selon l'une quelconque des revendications précédentes, comprenant l'étape consistant à :
faire varier la largeur d'un panneau (3, 4),
maintenir une distance fixe entre ledit bord d'un panneau avec une largeur variable et le dispositif de soudage (16) tout en déplaçant les panneaux le long du dispositif de soudage (16).

5. Procédé selon l'une quelconque des revendications précédentes, comprenant les étapes consistant à :
répéter l'étape consistant à appliquer une soudure (10) entre les panneaux (3, 4) de façon à former une série d'enveloppes interconnectées consécutives (1).

6. Procédé selon la revendication 5, comprenant l'étape consistant à:
enrouler les séries d'enveloppes sur un rouleau et/ou séparer les enveloppes (1) les unes des autres.

7. Procédé selon l'une quelconque des revendications précédentes, comprenant l'étape consistant à :
enrouler les séries d'enveloppes interconnectées consécutives (1) et les parties de feuille intermédiaires (20) sur un rouleau et/ou séparer les parties de feuille intermédiaires des enveloppes.

8. Procédé selon l'une quelconque des revendications précédentes, comprenant les étapes consistant à :
maintenir le processus d'application de soudures consécutives (10) et de formation d'enveloppes consécutives (1) et de parties de feuille intermédiaires (20) soudées,
séparer les parties de feuille intermédiaires (20) de panneau soudé desdites enveloppes consécutives (1).

9. Procédé selon l'une quelconque des revendications précédentes, comprenant l'étape consistant à :
fournir une soudure (10) dont la résistance est inférieure à la résistance à la déchirure du matériau flexible, ladite soudure formant une ligne d'affaiblissement nominale.

10. Procédé selon l'une quelconque des revendications précédentes, comprenant l'étape consistant à :
fournir une ligne d'affaiblissement nominale dans le matériau flexible d'au moins un des panneaux.

11. Procédé selon la revendication 10, comprenant l'étape consistant à :
former la ligne d'affaiblissement nominale au moyen d'une série de découpes dans le matériau flexible.
